# EUROPÄISCHE PATENTANMELDUNG

(11) **EP 0 550 821 A1**
(43) Veröffentlichungstag der Anmeldung: **14.07.1993**
(21) Anmeldenummer: 92119753.9
(22) Anmeldetag: 20.11.1992
(51) Int. Cl.: A01C 11/02

(54) **Verfahren und Einrichtung zum Aufziehen und Auspflanzen von Setzlingen**

(30) Priorität: 07.01.1992 CH 68/92
(71) Anmelder: Wäspi, Ingrid, CH-8475 Ossingen (CH)
(72) Erfinder: Wäspi, Hansruedi, CH-8475 Ossingen (CH)
(74) Vertreter: Hunziker, Jean

(57) **Zusammenfassung**

In Reihen und Kolonnen angeordnete Substratwürfel (1) mit den angewachsenen Setzlingen (2) werden einer mobilen Transport- und Pflanzeinrichtung (5) mit mehreren Arbeitsstationen und Transportmitteln zwischen denselben zugeführt. Zur vollautomatischen Auspflanzung der einzelnen Substratwürfel (1) in wählbaren Abständen hinter- und nebeneinander werden die Substratwürfel (1) mit den Setzlingen (2) durch fächerförmig angeordnete Trennscheiben (16) maschinell in Längskolonnen aufgetrennt und zugleich etwas aufgefächert. Beim Weitertransport werden die Substratwürfelkolonnen in Führungen weiter auf die vorgewählten Abstände der Pflanzreihen aufgefächert und je an schneller laufende Transportbänder (18) übergeben, wodurch die einzelnen Substratwürfel der aufgefächerten Kolonnen in wählbaren Abständen hintereinander vereinzelt werden. Die in dieser Weise auf die gewählten Pflanzabstände in Längsrichtung innerhalb einer Pflanzreihe vereinzelten Substratwürfel gelangen dann in Pflanzschuhe (19) und werden durch diese ausgepflanzt.

## Beschreibung

Die Erfindung bezieht sich auf ein verfahren sowie eine Einrichtung zum Aufziehen und Auspflanzen von in Substratwürfeln, z.B. in Erd- oder Erdpresstöpfen gezogenen Setzlingen.

Unter der in Fachkreisen gängigen Bezeichnung Erdpresstöpfe sind nicht eigentlich einzelne Töpfe zu verstehen, sondern einzelne Substratwürfel ohne äussere Begrenzung durch einen Behälter. Zu ihrer Herstellung wird, beispielsweise durch eine Füllmaschine auf eine tragende Unterlage gegebenes Substrat maschinell in einer Presstopfmaschine gepresst und durch einen Stanzvorgang in schachbrettartig angeordnete Substratwürfel, eben die Erdpresstöpfe, geschnitten. Die Aussaat erfolgt, meist auch wieder maschinell, in die vorgestanzten Erdpresstöpfe. Für die Auspflanzung der gezogenen Setzlinge in den gewünschten Abständen in die Erde müssen sie jeweils vereinzelt werden. Das manuelle Vereinzeln und Auspflanzen der einzelnen Töpfe ist eine mühsame und vor allem zeitraubende Arbeit. Ein geübter Arbeiter kann von Hand eine Arbeitsleistung von nur wenigen Quadratmetern in der Stunde erbringen. Angesichts der oft riesigen Felder ist dies eine unproduktive Leistung.

Eine gewisse Verbesserung bringen hier bekannte Geräte, welche das Auspflanzen von in Erdpresstöpfen gezogenen Setzlingen teilweise automatisieren. Es handelt sich dabei vorwiegend um fahrbare Geräte, denen die Töpfe manuell vereinzelt zugeführt werden, und welche diese mitttels eines Pflanzschuhs in einer Reihe hintereinander auspflanzen.

Mit der Erfindung soll die Aufgabe gelöst werden, eine spürbare Erleichterung und eine verglichen mit den bisherigen Verfahren erhebliche Leistungssteigerung bei der Auspflanzung von Setzlingen zu erzielen und gleichzeitig die Möglichkeit zu wahren, die Pflanzabstände sowohl in der Reihe hintereinander als auch zu den benachbarten Reihen frei wählen zu können.

Diese Aufgabe wird durch das im Anspruch 1 gekennzeichnete Verfahren gelöst.

Mit diesem Verfahren können mit wenig Personal, insbesondere mit reinen Hilfskräften, vollautomatisch in vorgewählten Abständen der Setzlinge in einer Pflanzreihe und der Pflanzreihen voneinander gleichzeitig ebensoviele Reihen Setzlinge ausgepflanzt werden, wie der Transport- und Pflanzeinrichtung zugeführt werden, also in der Regel 7 bis 9 Reihen, wobei sich die manuelle Arbeit auf die Zuführung der Substratwürfel mit den Setzlingen beschränkt.

Um die bei Erdpresstöpfen oft nachteilige Wirkung der Pressung zu vermeiden und die Zufuhr zur Transport- und Pflanzeinrichtung zu erleichtern, kann zweckmässig so vorgegangen werden, dass Substrat locker auf eine durch entfernbare Quer- und/oder Längslamellen in schachbrettartige Felder gewünschter Grösse aufgeteilte Unterlage eingebracht und besamt wird, und dass nach dem Aufkeimen der Setzlinge und Entfernen der Lamellen die Unterlagen mit den bewachsenen Substrattöpfen manuell der Transport- und Pflanzeinrichtung zugeführt werden und in dieser in einem ersten Arbeitsgang die Substratwürfel mit den Setzlingen von ihrer Unterlage abgestreift werden.

Gegenstand der Erfindung ist weiter eine Einrichtung zur Durchführung des erfindungsgemässen Verfahren mit den Merkmalen des Kennzeichens des Anspruchs 3.

Die abhängigen Ansprüche 2 bis 9 geben vorteilhafte Weiterbildungen der erfindungsgemässen Einrichtung an.

Die Erfindung wird im folgenden anhand von Ausführungsbeispielen mit Bezug auf die Zeichnung näher erläutert. Es zeigt:
- Fig. 1: schematisch einen Vertikalschnitt durch eine erste Ausführungsform einer erfindungsgemässen Einrichtung zur Durchführung des Verfahrens nach der Erfindung;
- Fig. 2: in einem schematischen Schnitt entsprechend demjenigen der Fig. 1 eine zweite Ausführungsform einer Einrichtung nach der Erfindung;
- Fig. 3: eine schematische Draufsicht auf die erfindungsgemässe Einrichtung, und
- Fig. 4: in einer schematischen Draufsicht einen Teil der Einrichtung zur Veranschaulichung der Auftrennung der Substratwürfel mit ihren Wurzelballen und der Auffächerung dieser Kolonnen.

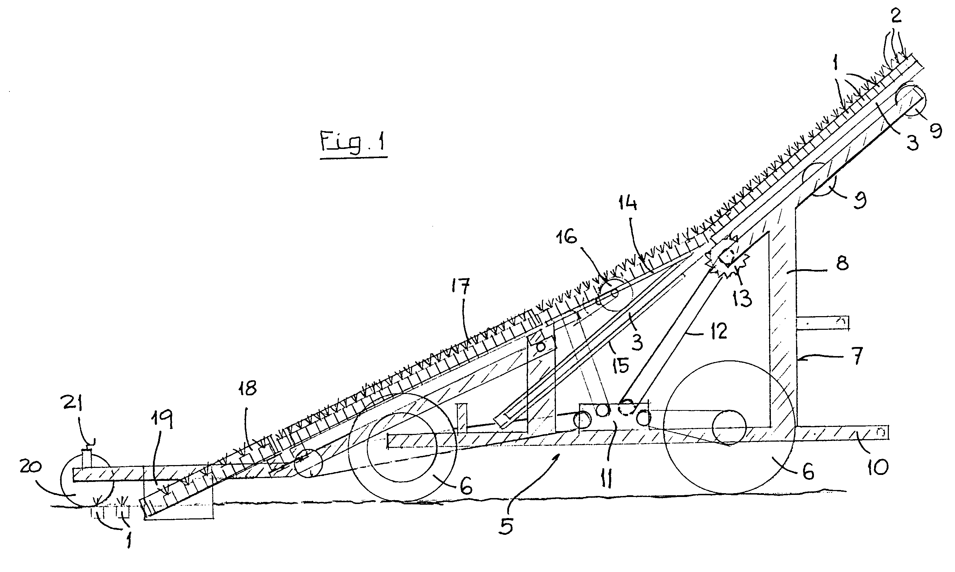

Ausgangspunkt des Verfahrens sind Substratwürfel 1 die bei der Ausführungsform gemäss Fig. 1 auf einer rechteckigen, tragenden Unterlage 3 aus Kunststoff oder Metall liegen. Diese Substratwürfel können herkömmliche Erdpresstöpfe sein, zu deren Herstellung in herkömmlichen Erdfüllmaschinen auf Unterlagen 3 eine Substratschicht aufgebracht, zu einem Quader verdichtet und durch einen Stanzvorgang in schachbrettartig auf der Unterlage 3 angeordnete Würfel geschnitten wird. Oder es kann sich um Erdtöpfe handeln, die gemäss einer nicht näher dargestellten Variante dadurch erzeugt werden, dass als Unterlagen 3 Rahmen dienen, die durch längs und quer in Abständen entfernbar einsetzbare Quer- und/oder Längslamellen in schachbrettartige Felder gewünschter Grösse aufgeteilt sind die, gegebenenfalls maschinell, durch eine Füllmaschine locker mit Substrat aufgefüllt werden, wodurch die bei Erdpresstöpfen oft nachteilige Wirkung der Pressung vermieden werden kann. Die Besamung der Töpfe erfolgt zweckmässig in an sich bekannten Sästrassen. Die bei der genannten Variante zum Einsatz kommenden Quer- und Längslamellen erleichtern - ein weiterer Vorteil dieser Ausführung - die spätere Vereinzelung der einzelnen Töpfe 1 mit den aufgekeimten Setzlingen 2, da sie eine Verflechtung des Wurzelsystems benachbarter Töpfe 1 verhindern oder zumindest erschweren.

Nach der Festigung der Töpfe 1 durch die Wurzelballen der Setzlinge 2 und Erreichen der Auspflanzreife werden die Töpfe zum Zwecke ihrer Auspflanzung der in der Zeichnung schematisch dargestellten und allgemein mit 5 bezeichneten Einrichtung zugeführt.

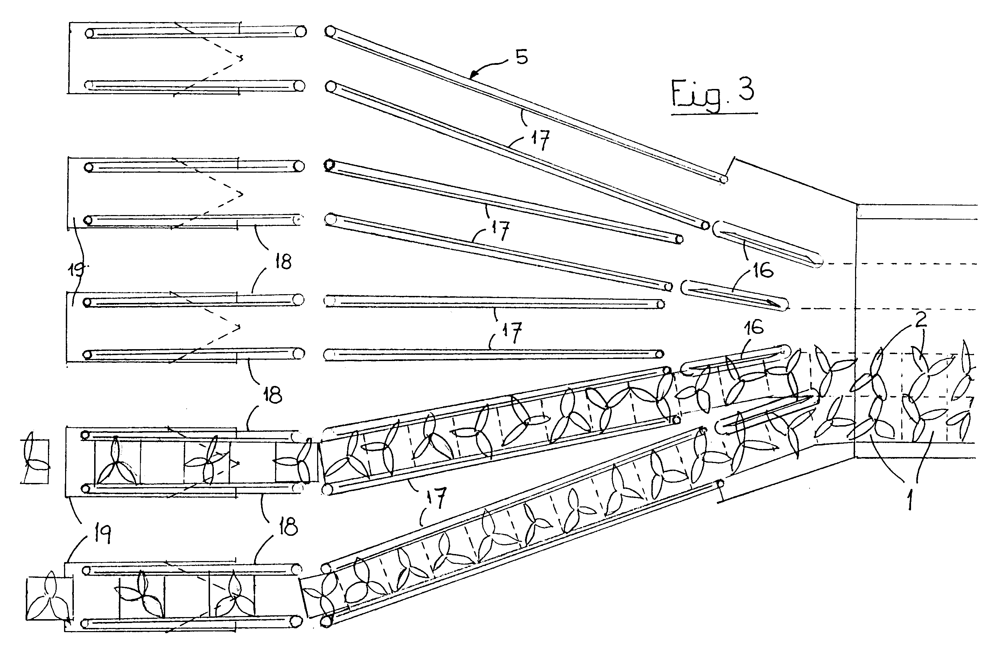

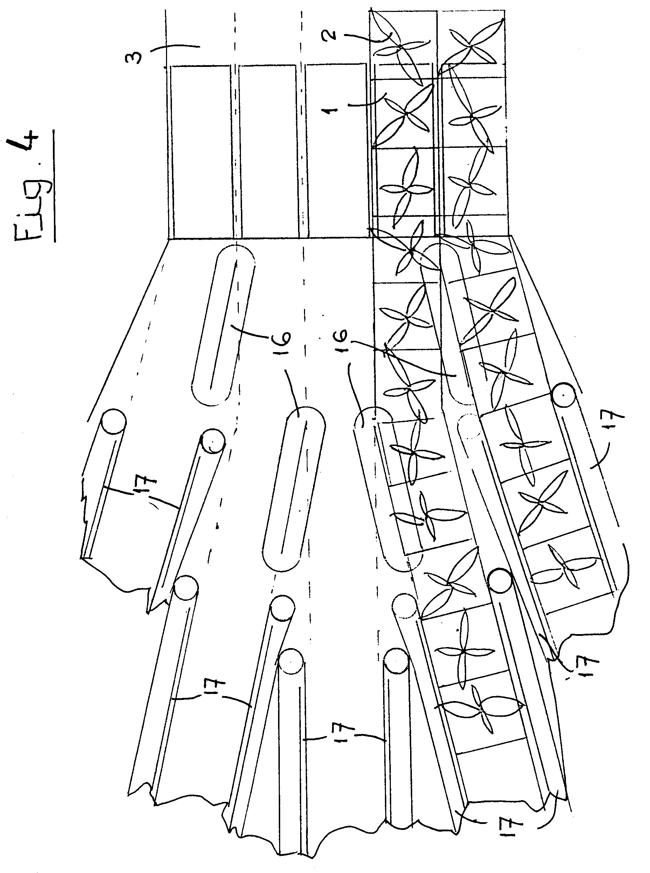

Die Einrichtung 5 umfasst ein auf Walzen oder Räderpaaren 6 fahrbares Gestell 7. Zufuhrseitig der Einrichtung 5 ist auf Stützen 8 eine geneigte Führungsfläche 9 angeordnet. Auf dem Bodenrahmen 10 des Gestells 7 ist ein Getriebe 11 angeordnet, welches über einen Antriebsriemen mit der einen Walze oder Achse des einen Räderpaars 6 der Einrichtung antriebsverbunden ist. Bei fahrender Einrichtung treibt ein Riemen 12 oder eine Kette ein Zahnrad 13, das aus der Führungsfläche 9 vorragt und dazu bestimmt ist, in eine Nut mit Zahnstange an der unteren Fläche der Unterlage 3 von manuell mitsamt ihrer Unterlage 3 auf die Führungsfläche 9 aufgesetzten Töpfen 1 einzugreifen und diese zu führen und in Richtung einer Abstreifvorrichtung weiter zu befördern, welche die Töpfe 1 von ihrer Unterlage 3 trennt. Die Abstreifvorrichtung ist durch eine spitzwinklig in einem der Dicke der Unterlagen 3 entsprechenden Abstand an der Führungsfläche 9 endende Abstreifplatte 14 gebildet. Beim Erreichen dieser Abstreifvorrichtung gleiten die zugeführten Töpfe 1 auf die Abstreifplatte 14, während ihre Unterlage 3 unter der Abstreifplatte 14 hindurch in eine Führung 15 gleitet und dort gestapelt oder entnommen werden kann. Die auf der Abstreifplatte 14 weiter transportierten oder rutschenden Töpfe gelangen in den Bereich vertikal rotierender Trennscheiben 16, deren Anzahl und Abstände auf die Anzahl und die Breite der Topflängskolonnen abgestimmt sind. Werden, wie bei der Ausführung der Fig. 3 und 4, die Töpfe 1 mit den Setzlingen 2 in jeweils fünf Kolonnen von Töpfen der Einrichtung 5 zugeführt, sind vier Trennscheiben 16 erforderlich, um die Töpfe 1 mit ihren Setzlingen 2 in einzelne Längskolonnen aufzutrennen. Wie die Fig. 3 und 4 gut erkennen lassen sind die Trennscheiben 16 von der Mitte her etwas schräggestellt, wodurch die getrennten Topfkolonnen etwas auseinandergefächert werden. Der Antrieb der Trennscheiben 16 erfolgt zweckmässig über einen Riemen oder eine Kette vom Getriebe 11 aus.

Der Abstand der Topfkolonnen nach der Auffächerung ist zweckmässig auf den gewünschten Abstand der einzelnen Kolonnen bei der Auspflanzung abgestimmt. Um diesen Abstand und damit den Pflanzreihenabstand verstellen zu können ist der Schrägstellungswinkel der Trennscheiben 16 zweckmässig verstellbar.

Zwischen seitlichen Transportbändern 17 werden die in dieser Weise getrennten Topfkolonnen weiter aufgefächert und zweiten, schneller laufenden Bändern 18 zugeführt. Bei den Bändern 17 bzw. 18 handelt es sich um seitliche Führungsbänderpaare, die über Antriebsriemen mit dem Getriebe 11 verbunden sind. Jeweils pro Kolonne ist ein Bänderpaar erforderlich. Diese Führungsbänder 17,18 verhindern ein Auseinanderbrechen der Töpfe 1 während deren Transport durch die Einrichtung 5. Um die Töpfe zu schützen sind die Bänder zweckmässig auf ihrer Aussenseite gepolstert.

Beim Uebergang vom langsamen Band 17 zum schnelleren Band 18 werden die einzelnen Töpfe 1 in den Kolonnen voneinander getrennt und gleichzeitig ein Abstand zwischen aufeinanderfolgenden vereinzelten Töpfen erzeugt, welcher dann den Abstand der ausgepflanzten Setzlinge bestimmt. Durch Aenderung des Geschwindigkeitsunterschiedes zwischen den Bändern 17 und 18 kann dieser Abstand verändert werden.

Am Ende der Transportbänder 18 befinden sich je ein Pflanzschuh 19 herkömmlicher Bauart. Dieser Pflanzschuh 19, welcher über eine Achse mit einer Freilaufrolle 20 verbunden ist, pflügt in die Erde eine schmale Furche, deren Tiefe über eine Kurbel 21 an der Freilaufrolle 20 gewählt werden kann und in welche die über die Bänder 18 vereinzelt zugeführten Setzlinge 2 gestellt werden. Die anschliessend darüber rollende Freilaufrolle 20 presst die aufgeworfene Erde wieder in die Furche und beendet damit den Einpflanzvorgang des einzelnen Erd- oder Erdpresstopfes.

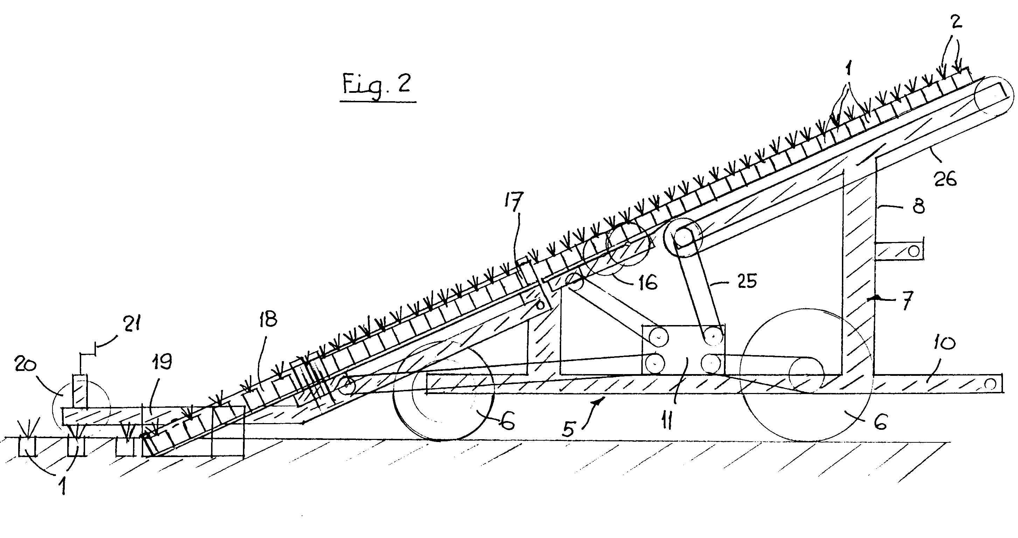

Von der Einrichtung nach der Fig. 1 unterscheidet sich das in Fig. 2 dargestellte Ausführungsbeispiel einzig dadurch, dass anstelle der Transportmittel für auf einer Unterlage in die Einrichtung gegebene Töpfe zufuhrseitig der Einrichtung ein auf den Stützen 8 angeordnetes Transportband 26 tritt, welches über eine Kette oder einen Riemen 25 mit dem Getriebe 11 antriebsverbunden ist. Bei fahrender Einrichtung treibt die Kette oder der Riemen 25 das Transportband 26 an. Die Erdpresstöpfe 1 oder andere Erdtopfsysteme werden nun maschinell oder manuell auf das Transportband 26 gegeben und durch dasselbe nach unten in den Bereich der angetriebenen Trennscheiben 16 transportiert, deren Anzahl und Abstände wiederum wie beim vorgehenden Beispiel auf die Anzahl und die Breite der Topflängskolonnen abgestimmt sind. Der Antrieb der Trennscheiben 16 kann auch bei diesem Beispiel über einen Riemen oder eine Kette vom Getriebe aus erfolgen oder aber die Trennscheiben 16 können durch Reibschluss mit dem Transportband 26 von diesem angetrieben werden. Beim Beispiel der Fig. 2 werden somit die Töpfe 1 mit den Setzlingen direkt, also ohne Unterlage aufgegeben. Entsprechend entfällt bei diesem Ausführungsbeispiel die Notwendigkeit einer Abstreifvorrichtung zum Abstreifen der Töpfe von ihrer Unterlage und die Töpfe gelangen direkt zur Trennvorrichtung zu ihrer Auftrennung in Längskolonnen.

In den vorliegenden Beispielen ist die Einrichtung mit einer Anhängevorrichtung ausgerüstet, welche ein Anhängen an ein beliebiges Zugfahrzeug, z.B. einen Traktor erlaubt. Ueber das Getriebe 11 treibt dann die gezogene Einrichtung die Bänder und Trennscheiben. Es wäre jedoch auch denkbar anstelle des Getriebes 11 einen Motor vorzusehen, der dann auch noch die Walzen oder Räder 6 antreiben könnte.

## Patentansprüche

1. Verfahren zum Aufziehen und Auspflanzen von in Substratwürfeln gezogenen Setzlingen, dadurch gekennzeichnet, dass in Reihen und Kolonnen angeordnete Substratwürfel (1) mit den angewachsenen Setzlingen (2) einer mobilen Transport- und Pflanzeinrichtung (5) mit mehreren Arbeitsstationen und Transportmitteln zwischen denselben zugeführt werden, wobei zur vollautomatischen Auspflanzung der einzelnen Setzlinge (1) in wählbaren Abständen hinter- und nebeneinander mindestens folgende Arbeitsgänge durchgeführt werden:
a) maschinelle Auftrennung der Substratwürfel (1) in Längskolonnen;
b) Weitertransport und Auffächerung der einzelnen Topfkolonnen auf die vorgewählten Abstände der Pflanzreihen;
c) Vereinzelung der einzelnen Substratwürfel der aufgefächerten Kolonnen durch Uebergabe an eine schneller laufende Transportvorrichtung (18) unter gleichzeitiger Erzeugung der gewählten Pflanzabstände in Längsrichtung innerhalb einer Pflanzreihe;
d) Zufuhr zu und Abgabe der vereinzelten Substratwürfel nacheinander an einen Pflanzschuh (19) und Auspflanzung durch diesen.

2. Verfahren nach Anspruch 1, dadurch gekennzeichnet, dass zur Vorbereitung der Zufuhr der Setzlinge (2) zu der mobilen Transport- und Pflanzeinrichtung (5) Substrat locker auf eine durch entfernbare Quer- und/oder Längslamellen in schachbrettartige Felder gewünschter Grösse aufgeteilte Unterlage (3) eingebracht und besamt wird, und dass nach dem Aufkeimen der Setzlinge und Entfernen der Lamellen die Unterlagen (3) mit den bewachsenen Substrattöpfen (1,2) manuell der Transport- und Pflanzeinrichtung zugeführt werden und in dieser in einem ersten Arbeitsgang die Substratwürfel (1) mit den Setzlingen (2) von ihrer Unterlage (3) abgestreift werden.

3. Einrichtung zur Durchführung des Verfahrens nach Anspruch 1, gekennzeichnet durch,
a) erste Transportmittel zur Aufnahme und zum Weitertransport von in Reihen und Kolonnen angeordneten Substratwürfeln (1) mit darauf gezogenen Setzlingen (2);
b) Mittel zum Weitertransport der Substratwürfel zu einer Trennvorrichtung zur maschinellen Auftrennung der Substratwürfel (1) in Längskolonnen;
c) zweite, fächerförmig auseinanderlaufende Transportmittel (17) für die Substratwürfelkolonnen zur Auffächerung der einzelnen Kolonnen auf die gewählten Abstände der Pflanzreihen und Zuführung zu
d) schneller laufenden dritten Transportmitteln (18) zur Vereinzelung der einzelnen Substratwürfel der aufgefächerten Kolonnen und zur Erzeugung der gewählten Pflanzabstände,
e) Pflanzschuhe (19) am Ende der schneller laufenden Transportmittel (19) zur Auspflanzung der Substratwürfel in Abständen hintereinander.

4. Einrichtung nach Anspruch 3, dadurch gekennzeichnet, dass die Trennvorrichtung durch fächerförmig auseinanderlaufend angordnete, rotierende Scheiben (16) gebildet ist.

5. Einrichtung nach einem der Ansprüche 3 und 4, dadurch gekennzeichnet, dass der Schrägstellungswinkel der zweiten, fächerförmig auseinanderlaufenden Transportmittel (17) zur Erzielung einer wählbaren Auffächerung der einzelnen Kolonnen verstellbar ist.

6. Einrichtung nach einem der Ansprüche 3 bis 5, dadurch gekennzeichnet, dass die genannten zweiten und dritten Transportmittel durch jeweils seitlich verlaufende Transportbänderpaare (17,18) gebildet sind, welche neben dem Transport der Substratwürfel (1) zugleich auch deren Zusammenhalt gewährleisten.

7. Einrichtung nach einem der Ansprüche 3 bis 6, zur Verarbeitung von auf einer Unterlage in Reihen und Kolonnen angeordneten Substratwürfeln, dadurch gekennzeichnet, dass im Anschluss an die ersten Transportmittel (13) eine Abstreifvorrichtung (14) zum Trennen der Substratwürfel (1) von ihrer Unterlage (3) vorhanden ist.

8. Einrichtung nach Anspruch 7, dadurch gekennzeichnet, dass die Substratwürfel auf einer Unterlage (3) angeordnet sind, die durch längs und quer in Abständen enfernbar eingesetzte Quer- und/oder Längslamellen in schachbrettartige Felder aufgeteilt ist.

9. Einrichtung nach einem der Ansprüche 3 bis 8, dadurch gekennzeichnet, dass sie auf ein Fahrgestell (6,7) montiert ist.

10. Einrichtung nach einem der Ansprüche 3 bis 9, dadurch gekennzeichnet, dass der Antrieb der Trennscheiben und der Transportmittel über ein in der Vorrichtung angeordnetes Getriebe (11) erfolgt, das mit den Rädern der Vorrichtung antriebsverbunden ist, und dass sie mit einer Zugkupplung versehen ist, durch welche sie an ein Zugfahrzeug, z.B. an einen Traktor anhängbar ist.
